# EUROPÄISCHE PATENTSCHRIFT

(11) **EP 2 846 653 B1**
(45) Veröffentlichungstag und Bekanntmachung des Hinweises auf die Patenterteilung: **30.03.2016**
(21) Anmeldenummer: 13724730.0
(22) Anmeldetag: 03.05.2013
(51) Int. Cl.: A41D 27/06, C09J 7/04, C09J 175/04, D06M 17/10, D06M 15/564, D04H 1/62

(54) **THERMISCH FIXIERBARES FLÄCHENGEBILDE**
THERMO-FUSIBLE SHEET MATERIAL
TEXTILE THERMOFIXABLE

(30) Priorität: 08.05.2012 DE 102012009055
(43) Veröffentlichungstag der Anmeldung: 18.03.2015
(73) Patentinhaber: Carl Freudenberg KG, 69469 Weinheim (DE)
(72) Erfinder: TRASER, Steffen, 64291 Darmstadt (DE); KREMSER, Steffen, 68542 Heddesheim (DE); HELLBACH, Björn, 69488 Birkenau (DE); ADLER, Matthias, 64646 Heppenheim (DE)
(86) Internationale Anmeldenummer: PCT/EP2013/001309
(87) Internationale Veröffentlichungsnummer: WO 2013/167250

(56) Entgegenhaltungen:
- EP-A2- 0 832 953
- CN-A- 101 570 676
- CN-A- 101 760 164
- DE-A1- 2 906 113
- GB-A- 1 554 102
- GB-A- 2 043 665
- US-A- 3 684 639

## Beschreibung

Die Erfindung betrifft thermisch fixierbare Flächengebilde, insbesondere verwendbar als fixierbare Einlage- oder Futterstoffe in der Textilindustrie, die sich durch verbesserte anwendungstechnische Eigenschaften und durch verbesserte Verarbeitbarkeit auszeichnen, sowie deren Herstellung und Verwendung als Einlagen für Textilien.

Einlagestoffe sind das unsichtbare Gerüst der Bekleidung. Sie sorgen für korrekte Passformen und optimalen Tragekomfort. Je nach Anwendung unterstützen sie die Verarbeitbarkeit, erhöhen die Funktionalität und stabilisieren die Bekleidung. Neben der Bekleidung können diese Funktionen in technischen Textilanwendungen, wie z.B. der Möbel-, Polster- sowie Heimtextilien-Industrie Anwendung übernehmen.

Wichtige Eigenschaftsprofile für Einlagestoffe sind Weichheit, Sprungelastizität, Griff, Wasch- und Pflegebeständigkeit sowie ausreichende Abriebbeständigkeit des Trägermaterials im Gebrauch.

Einlagestoffe können aus Vliesstoffen, Geweben, Gewirken oder vergleichbaren textilen Flächengebilden bestehen, die meist zusätzlich mit einer Haftmasse versehen sind, wodurch die Einlage mit einem Oberstoff meist thermisch durch Hitze und/oder Druck verklebt werden kann (Fixiereinlage). Die Einlage wird somit auf einen Oberstoff laminiert. Die genannten verschiedenen textilen Flächengebilde haben je nach Herstellungsverfahren unterschiedliche Eigenschaftsprofile. Gewebe bestehen aus Fäden/Garnen in Kette- und Schussrichtung, Gewirke bestehen aus Fäden/Garnen, die über eine Maschenbindung zu einem textilen Flächengebilde verbunden werden. Vliesstoffe bestehen aus zu einem Faserflor abgelegten Einzelfasern, die mechanisch, chemisch oder thermisch gebunden werden.

Bei mechanisch gebundenen Vliesstoffen wird das Faserflor durch mechanisches Verschlingen der Fasern verfestigt. Hierzu verwendet man entweder eine Nadeltechnik oder ein Verschlingen mittels Wasser- bzw. Dampfstrahlen. Die Vernadelung ergibt zwar weiche Produkte, allerdings mit relativ labilem Griff, so dass sich diese Technologie im Bereich der Einlagestoffe nur in ganz speziellen Nischen durchsetzen konnte. Außerdem ist man in der mechanischen Vernadelung üblicherweise auf ein Flächengewicht > 50 g/m² angewiesen, was für eine Vielzahl an Einlagestoffanwendungen zu schwer ist.

Mit Wasserstrahlen verfestigte Vliesstoffe lassen sich in niedrigeren Flächengewichten darstellen, sind im Allgemeinen aber flach und wenig sprungelastisch.

Bei chemisch gebundenen Vliesstoffen wird der Faserflor durch Imprägnieren, Besprühen oder mittels sonst üblicher Auftragsmethoden mit einem Bindemittel (z.B. Acrylatbinder) versehen und anschließend kondensiert. Das Bindemittel bindet die Fasern untereinander zu einem Vliesstoff, hat aber zur Folge, dass ein relativ steifes Produkt erhalten wird, da sich das Bindemittel über weite Teile des Faserflors verteilt erstreckt und die Fasern wie in einem Verbundwerkstoff durchgehend miteinander verklebt. Variationen im Griff bzw.

Weichheit lassen sich nur bedingt über Fasermischungen oder Bindemittelauswahl kompensieren.
Thermisch gebundene Vliesstoffe werden zur Verwendung als Einlagestoffe üblicherweise kalander- oder durch Heißluft verfestigt. Bei Einlagevliesstoffen hat sich heutzutage die punktförmige Kalanderverfestigung als Standardtechnologie durchgesetzt. Das Faserflor besteht dabei in der Regel aus speziell für diesen Prozess entwickelten Fasern aus Polyester oder Polyamid und wird mittels eines Kalanders bei Temperaturen um den Schmelzpunkt der Faser verfestigt, wobei eine Walze des Kalanders mit einer Punktgravur versehen ist. Solch eine Punktgravur besteht z.B. aus 64 Punkten/cm² und kann z.B. eine Verschweißfläche von 12% besitzen. Ohne eine Punktanordnung würde der Einlagestoff flächenartig verfestigt und ungeeignet hart im Griff sein.

Die oben beschriebenen unterschiedlichen Verfahren zur Herstellung von textilen Flächengebilden sind bekannt und in Fachbüchern und in der Patentliteratur beschrieben.

Die Haftmassen, welche üblicherweise auf Einlagestoffe aufgebracht sind, sind meist thermisch aktivierbar und bestehen in der Regel aus thermoplastischen Polymeren. Die Technologie zum Aufbringen dieser Haftmassenbeschichtungen erfolgt nach dem Stand der Technik in einem separaten Arbeitsschritt auf das Faserflächengebilde. Als Haftmassentechnologie sind üblicherweise Pulverpunkt-, Pastendruck-, Doppelpunkt-, Streu- und Hotmeltverfahren bekannt und in der Patentliteratur beschrieben. Als am leistungsfähigsten hinsichtlich Verklebung mit dem Oberstoff auch nach Pflegebehandlung und in Bezug auf die Rückvernietung wird heute die Doppelpunktbeschichtung angesehen.

Ein solcher Doppelpunkt weist einen zweischichtigen Aufbau auf. Er besteht aus einem Unter- und einem Oberpunkt. Der Unterpunkt dringt in das Basismaterial ein und dient als Sperrschicht gegen Haftmassenrückschlag und zur Verankerung der Oberpunktpartikel. Übliche Unterpunkte bestehen beispielsweise aus Bindemittel und/oder aus einem thermoplastischen Polymeren, das bei der Fixierung zur Klebkraft mit beiträgt. Je nach eingesetzter Chemie trägt der Unterpunkt neben der Verankerung im Basismaterial auch als Sperrschicht zur Verhinderung des Haftmassenrückschlages bei. Hauptklebekomponente im zweischichtigen Verbund ist primär der Oberpunkt. Dieser kann aus einem thermoplastischen Material bestehen, welches als Pulver auf den Unterpunkt aufgestreut wird. Nach dem Streuvorgang wird der überschüssige Teil des Pulvers (zwischen den Punkten der unteren Schicht) zweckmäßigerweise wieder abgesaugt. Nach anschließendem Sintern ist der Oberpunkt auf dem Unterpunkt (thermisch) gebunden und kann als Klebstoff zum Oberpunkt dienen.

Je nach Einsatzzweck des Einlagestoffes werden eine unterschiedliche Anzahl an Punkten aufgedruckt und/oder die Haftmassenmenge oder die Geometrie des Punktmusters variiert. Eine typische Punktanzahl sind z.B. CP 110 bei einer Auflage von 9 g/m² bzw. CP 52 mit einer Auflagemenge von 11 g/m².

Weit verbreitet ist auch der Pastendruck. Bei dieser Technologie wird eine wässrige Dispersion aus thermoplastischen Polymeren, üblicherweise in Partikelform mit einer Partikelgröße < 80 µm, Verdickern und Laufhilfsmitteln hergestellt und dann pastös mittels eines Rotationssiebdruckverfahrens auf die Trägerlage meist punktförmig aufgedruckt. Anschließend wird die bedruckte Trägerlage zweckmäßigerweise einem Trocknungsprozess unterzogen.

Es ist bekannt, dass für Einlage- oder Futterstoffe als Haftmedien für die Heißverklebung verschiedenste Schmelzklebstoffe eingesetzt werden können.

Schmelzklebstoffe, auch Heißklebestoffe, Heißkleber oder im Englischen Hotmelts genannt, sind seit langem bekannt. Allgemein versteht man unter ihnen im wesentlichen lösungsmittelfreie Produkte, die im geschmolzenen Zustand auf eine Klebefläche aufgetragen werden, rasch beim Abkühlen erstarren und damit schnell Festigkeit aufbauen. Im Regelfall werden thermoplastische Polymere, wie Polyamide (PA), Copolyamide, Polyester (PES), Copolyester, Ethylvinylacetat (EVA) und dessen Copolymere (EVAC),, Polyethylen (PE), Polypropylen (PP), amorphe Polyalphaolefine (APAO), Polyurethane (PU), etc. als Schmelzklebstoffe verwendet.

Die Klebewirkung der Schmelzklebstoffe basiert grundsätzlich darauf, dass sie sich als thermoplastische Polymere reversibel aufschmelzen lassen und als flüssige Schmelze aufgrund ihrer durch den Schmelzvorgang erniedrigten Viskosität in der Lage sind, die zu klebende Fläche zu benetzen und dadurch eine Adhäsion zu ihr auszubilden. Als Folge der anschließenden Abkühlung erstarrt der Schmelzklebstoff wieder zum Festkörper, der eine hohe Kohäsion besitzt und auf diese Weise die Verbindung zur Klebefläche herstellt. Nachdem die Klebung stattgefunden hat, sorgen die viskoelastischen Polymere dafür, dass die Adhäsion auch nach dem Abkühlvorgang mit ihren Volumenänderungen und dem damit verbundenen Aufbau mechanischer Spannungen erhalten bleibt. Die aufgebaute Kohäsion vermittelt die Bindekräfte zwischen den Substraten.

Nachteilig an der Verwendung der herkömmlichen Schmelzklebstoffe ist, dass bedingt durch die oft hohen Schmelztemperaturen das Verkleben von temperaturempfindlichen Substraten erschwert ist, und dass die Klebungen durch den thermoplastischen Charakter der Polymere bei Temperaturerhöhung rasch an Festigkeit einbüßen. Letzterem Effekt kann man dadurch entgegenwirken, dass man die Polymermoleküle nach dem Abbindevorgang untereinander vernetzt (chemisch verknüpft). Der Kohäsionsverlust bei erhöhter Temperatur wird dadurch reduziert bzw. negiert und die Bindekraft des Schmelzklebstoffs bleibt erhalten. Derartige Systeme, die während oder nach der Abkühlung chemischen Vernetzungen unterworfen sind, nennt man reaktive Schmelzklebstoffe (reaktive Hotmelts). Reaktive Schmelzklebstoffe werden beispielsweise in EP1333045A2, DE3231062A1, WO1993011200A1, DE10347628A, DE4339381A1, DE10027957C1, DE102004052756A1 und US20090242123A1 beschrieben.

CN 101 760 164 A beschreibt einen Schmelzkleber auf Polyurethanbasis für adhäsive Einlagestoffe. Die Formulierung des Polyurethanschmelzklebers enthält Diisocyanate, Dihydroxyalkohole, Kettenverlängerer, Vernetzer, Antioxidantien, Antivergilbungsmittel, Katalysatoren, Kupplungsmittel und andere Substanzen. Das Adhäsiv kann in Pulverform gemahlen werden bei niedriger Temperatur und wird in Punktform auf das Basisgewebe aufgebracht.

Die CN 101 570 676 A beschreibt einen Polyurethanschmelzkleber für Einlagestoffe, welcher durch die Reaktion von Polyesterpolyolen mit einem relativen Molekulargewicht von 2000-2200, 4,4-Diphenylmethan, Diisocyanaten (MDI), Toluol diisocyanaten (TDI), 1,4-Butandiol (1,4-BDO) und aromatischem Diaminverlängerer hergestellt wird, wobei das Molekulargewicht des Polyurethanschmelzklebers im Bereich von 85000 bis 95000 liegt.

Aus der EP 0 832 953 A2 ist eine Heißschmelzharzzusammensetzung bekannt. Diese umfasst 1 bis 30 Gew.-% einer Verbindung der allgemeinen Formel (1) Q-(X-A)n worin X eine Urethan- oder Harnstoffgruppe, Q eine Gruppe mit einer Valenz von n, A eine monovalente Gruppe, mindestens eines von Q und A ein Isocyanatrest ist und die andere ein Amin- oder Alkoholrest, und n eine Zahl von 1 bis 3 ist und 70 bis 99 Gew.-% eines thermoplastischen Polyurethanharzes (B) enthält.

Aus der DE 29 06 113 ist die Verwendung von speziellen feindispersen Polyurethanharnstoffen als Heißsiegelkleber zur Herstellung von heißsiegelbaren Einlagestoffen bekannt.

Die US 3 684 639 beschreibt heißsiegelfähige textile Lagen mit Heißsiegelklebern aus aliphatischen Isocyanaten und Glykolen mit aliphatisch gebundenen Hydroxylgruppen und einem Molekulargewicht von bis zu 400 und 0,1 bis 50 Gew.-% einer Polyhydroxyverbindung mit mindestens zwei aliphatischen Hydroxylgruppen und einem Molekulargewicht von bis zu 2500.

Aus der GB 1 554 102 ist ein Adhesivkleber bekannt, der in Schuhsohlen eingesetzt werden kann, umfassend ein Polyurethan, das aus folgenden Reagenzien hergestellt wird: (a) einer Isocyanatkomponente mit einem Anteil eines Dicyclohexyldiisocyanats oder eines hydrierten Xyloldiisocyanats und der Isocyanat reaktiven Komponente (B) in einer ausreichenden Menge um ein Verhältnis von Isocyanatgruppen zu isocyanatreaktiven Gruppen im Bereich von 0,95 zu 1 bis 1,10 zu 1 einzustellen, wobei die Komponente (B) von 45 Mol.-% bis 25 Mol.-% der Komponente (B) eines Polyesterdiols mit einem Molekulargewicht von nicht weniger als 750 und einer Säurezahl von weniger als 2 umfasst, umfassend einen Adipinsäureester und 1,4 Butandiol oder 1,6 Hexandiol, und (ii) 55 Mol.-% bis 75 Mol.-% der Komponente (B) von 1,4 Butandiolkettenverlängerer.

Aus der GB 2 043 665 A sind Polyurethane bekannt mit adhäsiven Eigenschaften, hergestellt aus einem Diisocyanat, einem ersten Diol mit einem mittleren Molekulargewicht zwischen 500 und 5000; mindestens drei Diolen mit einem Molekulargewicht unter 500, von denen eines schmelzpunkterniedrigende Eigenschaften hat und von denen ein anderes unvernetzt ist und frei von Ethergruppen; und 0 bis 5 Mol.-% einer monofunktionalen Verbindung, wobei das Äquivalentverhältnis des schmelzpunkterniedrigenden Diols zu dem unvernetzten Diol im Bereich von 20 zu 80 bis 75 zu 25 liegt.

Im Textilbereich werden üblicherweise Haftmassen auf Basis von Polyamid oder Polyester verwendet. Diese zeigen jedoch insbesondere auf schwer fixierbaren Oberstoffen, wie beispielsweise glatten Polyamidoberstoffen, hart gedrehten Oberstoffen, viskosen Oberstoffen sowie silikon-, fluorcarbon- oder mit Polyurethanen beschichteten Oberstoffen, keine ausreichende Haftung.

Die Aufgabe der vorliegenden Erfindung besteht darin, mit Haftklebern ausgerüstete textile Flächengebilde bereitzustellen, die auch auf schwer fixierbaren Oberstoffen, wie beispielsweise mit Fluorcarbon oder mit Polyurethanen beschichteten Oberstoffen, eine ausreichende Haftung zeigen. Darüber hinaus sollen die textilen Flächengebilde mit üblichen Fixierpressen problemlos verarbeitet werden können, sehr gute haptische und optische Eigenschaften zeigen, einfach und kostengünstig herstellbar sein, eine sehr gute Waschbeständigkeit bis 95 °C zeigen, und auch Trocknungsbedingungen bei hohen Zyklenzahlen überstehen.

Eine weitere Aufgabe besteht darin die textilen Flächengebilde mit einer hohen Elastizität, insbesondere in Querrichtung, auszustatten.

Diese Aufgabe wird erfindungsgemäß mit einem thermisch fixierbaren Flächengebilde gelöst, insbesondere verwendbar als fixierbarer Einlagestoff in der Textilindustrie mit einer Trägerlage aus einem textilen Material, auf welcher eine Haftmassenstruktur aufgebracht ist, die eine Polyurethan-Schmelzklebstoffzusammensetzung umfasst, welche ein thermoplastisches Polyurethan in Form eines Umsetzungsprodukts von
- mindestens einem bifunktionellen, vorzugsweise aliphatischen, cycloaliphatischen oder aromatischen, Polyisocyanat (A) mit einem Isocyanatgehalt von 5 bis 65 Gew.-Anteilen mit
- mindestens einem Polyol (B) ausgewählt aus der Gruppe bestehend aus Polyesterpolyol, Polyetherpolyol, Polycaprolactonpolyol, Polycarbonatpolyol, Copolymer aus Polycaprolactonpolyol und Polytetrahydrofuran sowie Gemischen hiervon sowie gegebenfalls mit
- mindestens einem Kettenverlängerer (C)
enthält wobei die Haftmassenstruktur als zweilagige Haftmassenstruktur, umfassend eine unmittelbar auf dem Flächengebilde aufliegende Unterschicht sowie eine auf der Unterschicht angeordnete und die thermoplastische Polyurethan-Haftmasse umfassende Oberschicht ausgebildet ist, wobei die Unterschicht ein Polyurethan als Binder mit einem Schmelzpunkt > 190 °C und/oder ein thermoplastisches Polyurethan mit einem Schmelzpunkt < 190 °C enthält.

Bevorzugte Ausgestaltungen der Erfindung sind in den Unteransprüchen beschrieben.

Gemäß der Erfindung weist das Flächengebilde eine Haftmassenstruktur auf, welche eine Polyurethan enthaltende Schmelzklebstoffzusammensetzung umfasst. Diese verleiht dem erfindungsgemäßen Flächengebilde ein hohes Haftvermögen insbesondere auf schwer fixierbaren Oberstoffen, wie beispielsweise hart gedrehten, fluorcarbon- oder polyurethanbeschichteten Oberstoffen bzw. Oberstoffen mit glatten Oberflächen. Aber auch auf herkömmlichen Oberstoffen weisen die Polyurethanklebstoffe analoge Haftkräfte gegenüber den standarmäßig eingesetzten Polyamiden oder Polyestern auf. Darüber hinaus kann durch die Verwendung des thermoplastisches Polyurethans eine überraschend gute Waschbeständigkeit und hohe Elastizität des Flächengebildes, insbesondere in Querrichtung, erreicht werden. So können auch steifere Vliese verwendet werden ohne Nachteile in der haptischen Gesamtperformance zu erfahren. Des Weiteren ist es auch möglich Flächengebilde allein durch die Polyurethan-Beschichtung eine hohe Elastizität zu verleihen ohne auf Fasern (z.B. BIKO-Fasern) oder Garne mit einer hoher Elastizität zurüchgreifen zu müssen. Hierdurch können neue Produkte mit spezifischen Eigenschaften hergestellt werden, wie z.B. eine elastische Bundeinlage auf Basis eines konventionellen Polyamid/Polyester-Vliesstoffes.

Ein weiterer Vorteil der Verwendung von thermoplastischen Polyurethanen besteht darin, dass das erfindungsgemäße textile Flächengebilde einen überraschend weichen, elastischen, schönen (angenehmen) Griff aufweist. Der Griff der Einlage ist ein signifikanter und wichtiger Test in der Textilindustrie. Vorteilhaft ist insbesondere dass der angenehme Griff ohne Silikonausrüstungen für die Basis erzielt werden kann.

Ein weiterer Vorteil der Verwendung von thermoplastischen Polyurethanen besteht darin, dass man eine große Synthesefreiheit hat. So stehen für die Polyurethansynthese eine große Auswahl an Monomeren zur Verfügung, was eine einfache Einstellung der gewünschten physikalische Eigenschaften wie Härte, Elastizität, etc. ermöglicht.

Vorteilhafter Weise werden die Schmelzklebstoffe in Pulverform eingesetzt. Die Größe der Partikel orientiert sich an der zu bedruckenden Fläche, beispielsweise der gewünschten Größe eines Bindungspunktes. Im Falle eines Punktmusters kann der Partikeldurchmesser zwischen >0 µ und 500 µ variieren. Grundsätzlich ist die Partikelgröße des thermoplastischen Polyurethans nicht einheitlich, sondern folgt einer Verteilung, d.h. man hat immer ein Partikelgrößenspektrum vorliegen. Die Partikelgröße muss abgestimmt sein auf die gewünschte Auftragsmenge, Punktgröße und Punktverteilung.

Es ist denkbar reaktive Schmelzklebstoffe, beispielsweise bei Raumtemperatur feste, schmelzbare Isocyanat-terminierte Polyurethanprepolymere, einzusetzen. Die reaktiven Schmelzklebstoffe werden vorzugsweise im Temperaturbereich von 100 bis 140 °C eingesetzt und binden durch Abkühlen zunächst physikalisch, anschließend durch Reaktion mit Luftfeuchtigkeit chemisch ab. Exemplarisch sind für letztere Systeme die Patente US20090242123A1, WO2011120895A1, WO2010068736A2 und WO1999028363A1 zu nennen.

Erfindungsgemäß bevorzugt ist jedoch die Verwendung von nicht-reaktiven Schmelzklebstoffen. Diese können beispielsweise in Form von Filmen oder Pulvern, insbesondere aus linearen, Hydroxyl-terminierten Polyurethanen mit kristallisierenden Polyestersegmenten, vorzugsweise bei Temperaturen im Bereich von 60 bis 190 °C, eingesetzt und durch Abkühlen und Rekristallisation physikalisch abgebunden werden.

Die nicht-reaktiven Polyurethan-Schmelzklebstoffe können in Pulverform vorliegen und mittels Streuauftrag aufgebracht werden, was insbesondere zum Kleben poröser Substrate für die Herstellung insgesamt atmungsaktiver Textilverbunde zweckmäßig ist. Vorteilhaft am Streuauftrag ist ferner, dass es eine einfache Auftragsmethode für Anwendungen in großem Maßstab ist. Da thermoaktivierte Pulver, beispielsweise aus Hydroxyl-terminierten Polyurethanen, bereits bei niedrigen Temperaturen klebfähig sind, eignen sie sich zur schonenden Laminierung wärmeempfindlicher Substrate, z.B. hochwertiger Textilien. Dank guter Fließeigenschaften im aktivierten Zustand wird selbst bei niedrigem Druck und kurzer Anpresszeit eine gute Verbindung hergestellt; dennoch bleibt das Risiko des Durchschlagens in das Gewebe gering.

Als bifunktionelles Polyisocyanat (A) werden vorzugsweise C₄₋₁₈ aliphatische und/oder C₆₋₂₀ cycloaliphatische sowie C₆₋₂₀ aromatische Diisocyanate mit Isocyanatgehalten von 5 bis 65 Gew.-Anteilen eingesetzt. Vorteilhaft an der Verwendung von aliphatischen Polyisocyanaten ist, dass sich mit ihnen vergilbungsfreie Produkte herstellen lassen. Vorteilhaft an der Verwendung von aromatischen Polyisocyanaten ist, dass sie eine gute Kristallisationsfähigkeit haben und gute mechanische Eigenschaften aufweisen.

So eignen sich insbesondere 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanato-dicyclohexylmethan (H₁₂MDI, HMDI), 1-Isocyanato-1-methyl-4(3)isocyanato-methylcyclohexan und Bis-(isocyanatomethyl)-norbornan und/oder deren Isomerengemische sowie Toluol-2,4-diisocyanat (TDI), 1,5-Naphthalendiisocyanat (NDI), 3,3'-Dimethyl-4,4'-biphenylendiisocyanat (TODI), 2,2'-Diphenylmethandiisocyanat (2,2'-MDI), 2,4'-Diphenylmethandiisocyanat (2,4'-MDI), 4,4'-Diphenylmethandiisocyanat (4,4'-MDI) und/oder deren Isomerengemische.

Als besonders geeignet haben sich die aliphatischen und cycloaliphatischen Diisocyanate 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (H₁₂MDI, HMDI), 1-Isocyanato-1-methyl-4(3)isocyanato-methylcyclohexan und Bis-(isocyanatomethyl)-norbornan erwiesen.

Besonders bevorzugte Polyisocyanate gemäß A sind 1,6-Diisocyanatohexan (HDI), 1-Isocyanato-3,3,5-trimethyl-5-isocyanatomethylcyclohexan (Isophorondiisocyanat, IPDI) und 4,4'-Diisocyanatodicyclohexyl-methan. Besonders bevorzugtes Polyisocyanat gemäß A ist 1,6-Diisocyanatohexan (HDI).

Geeignete Polyole gemäß B sind beispielsweise Polyesterpolyole, vorzugsweise mit einem Molekulargewicht von 400 g/mol bis 6000 g/mol, Polyetherpolyole mit einem Molekulargewicht von 400 g/mol bis 6000 g/mol, Polycaprolactonpolyole, vorzugsweise mit einem Molekulargewicht von 450 g/mol bis 6000 g/mol, Polycarbonatpolyole, vorzugsweise mit einem Molekulargewicht von 450 g/mol bis 3000 g/mol sowie Copolymere aus Polycaprolacton und Polytetrahydrofuran, vorzugsweise mit einem Molekulargewicht von 800 g/mol bis 4000 g/mol.

Besonders bevorzugte Polyole gemäß B sind Polyesterpolyole mit einem Molekulargewicht von 1000 g/mol bis 4000 g/mol. Diese Polyole zeichnen sich durch gute mechanische Eigenschaften, insbesondere im Hinblick auf Elastizität, Abrieb, Rückpralleigenschaften, Modulwerte, etc., bei relativ geringen Rohstoffkosten aus.

Unter einem Polyesterpolyol wird im Rahmen der vorliegenden Erfindung ein Polyester mit mehr als einer OH-Gruppe, bevorzugt zwei endständigen OH-Gruppen verstanden. Sie können auf bekannten Wegen hergestellt werden, beispielsweise aus aliphatischen Hydroxycarbonsäuren oder aus aliphatischen und/oder aromatischen Dicarbonsäuren und einem oder mehreren Diolen.

Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6-Hexandiol, Neopentylglykol und ε-Caprolacton,

Erfindungsgemäß bevorzugt wird als Polyesterpolyol ein gut kristallisierendes Polyesterpolyol eingesetzt, Geeignete kristallisierende Polyesterpolyole sind beispielsweise solche auf Basis linearer, vorzugsweise unvernetzter aliphatischer Dicarbonsäuren mit 6 bis 12 Kohlenstoffatomen im Molekül wie z.B. Adipinsäure und Dodecandisäure und linearen Diolen mit 4 bis 8 Kohlenstoffatomen im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Besonders bevorzugt wird ein 1,4-Butandiol-Adipat mit einem Molekulargewicht von 2000 g/mol eingesetzt

Geeignete Kettenverlängerer gemäß C sind zweiwertige aliphatische C₁₋₈ Alkohole beispielsweise Ethylenglykol, 1,2-Propandiol, 1,3-Propandiol, 1,3-Butandiol, 1,4-Butandiol, 2,3-Butandiol, Cyclohexandimethanol (CHDM) und 1,6-Hexandiol.

Bevorzugte Kettenverlängerer gemäß C haben eine gerade Anzahl von Kohlenstoffatomen. Hier sind 1,3-Butandiol, 1,4-Butandiol, 2,3-Butandiol und deren Isomerengemische sowie 1,6-Hexandiol zu nennen. Besonders bevorzugte Kettenverlängerer gemäß C sind 1,4-Butandiol und 1,6-Hexandiol.

Die Komponenten A, B und C werden vorzugsweise in folgenden Mengenverhältnissen miteinander umgesetzt: A = 5-25 Gewichtsteile, B = 100 Gewichtsteile, C = 0,5-15 Gewichtsteile.

Das molare Verhältnis zwischen dem Polyisocyanat A und den Alkoholfunktionalisierten Komponenten, Polyol B und Kettenverlängerer C, liegt vorzugsweise zwischen 0,7 und 1.0, noch bevorzugter zwischen 0,9 und 1,0 und besonders bevorzugt zwischen 0,94 und 0,98.

Der Schmelzpunkt eines thermoplastischen Polyurethans lässt sich unter anderem über das molare Verhältnis zwischen dem Polyisocyanat A und den Alkohol-funktionalisierten Komponenten, Polyol B und Kettenverlängerer C, steuern, da die polymeren Ketten immer kürzer werden, je weiter das molare Verhältnis von 1,0 abweicht. Für besonders niedrig schmelzende, thermoplastische Polyurethane kann es zweckmäßig sein das molare Verhältnis auf Werte zwischen 0,7 und 0,9, vorzugsweise zwischen 0,8 und 0,9 und besonders bevorzugt zwischen 0,85 und 0,89 einzustellen.

Unter dem molaren Verhältnis versteht der Fachmann das Verhältnis zwischen der Zahl der Mole an Isocyanatgruppen und der Zahl der Mole an Alkoholgruppen. Bei einem äquimolaren Verhältnis ist die Zahl der Mole an Isocyanatgruppen und die Zahl der Mole an Alkoholgruppen gleich und das molare Verhältnis beträgt 1,0. Bei einem Überschuss an alkoholischen Gruppen ist das molare Verhältnis kleiner 1,0, bei einem Überschuss an Isocyanatgruppen liegt das molare Verhältnis bei Werten größer 1,0. Ein molares Verhältnis größer 1,0 ist für die erfindungsgemäßen Polyurethan-Haftmassen weniger geeignet, da bei einem Überschuss an Isocyanatgruppen freies monomeres Isocyanat vorhanden sein kann.

Praktische Versuche haben ergeben, dass mit einer nicht-reaktiven Polyurethan-Schmelzklebstoffzusammensetzung auf Basis von mindestens einem bifunktionellen Polyisocyanat (A) mit Isocyanatgehalten von 5 bis 50 Gew.-Anteilen, vorzugsweise 5 bis 25 Gew.-Anteilen, und einem Gemisch bestehend aus B) einem Polyesterpolyol, vorzugsweise 1,6-Hexandioladipat mit einer OH-Zahl von 56 und einer Funktionalität von 2 und C) einem Gemisch der Kettenverlängerer 1,4-Butandiol und 2,3-Butandiol im Verhältnis 80:20 besonders gute Ergebnisse erzielt werden. Vorteilhafterweise beträgt der Gew.-Anteil der Polyesterpolyolkomponente B) 100 Gewichtsteile. Vorteilhafterweise wird das Verhältnis von A zu B+C so gewählt, dass das molare Verhältnis von NCO zu OH von 0,7 bis 1,0 vorzugsweise 0,9 bis 1,0 und besonders bevorzugt 0,94 bis 0,98 beträgt. Bei Anwendungen die, wie oben beschrieben, einen besonders niedrigen Schmelzpunkt erfordern ist es besonders vorteilhaft das molare Verhältnis auf Werte zwischen 0,85 und 0,89 einzustellen.

Der Schmelzpunktbereich der Polyurethan-Schmelzklebstoffzusammensetzung beträgt vorzugsweise 80 - 190 °C, noch bevorzugter 90 - 150 °C, noch bevorzugter 100 - 130 °C.

Der MFI-Wert der Polyurethan-Schmelzklebstoffzusammensetzung beträgt vorzugsweise [160°C/2, 16 kg]: 1 - 200 g/10min, noch bevorzugte 5 - 120 g/10min, noch bevorzugter 10 - 80 g/10 min gemessen nach DIN ISO 1133. Die Herstellung der Polyurethan-Schmelzklebstoffzusammensetzung kann auf einfache Weise im Batch-Prozess beispielsweise wie folgt durchgeführt werden:
Das Polyol wird bei 90 °C unter Vakuum für einen Zeitraum von zwei Stunden entgast und entwässert. Anschließend erwärmt man das Polyol auf 100 °C und gibt unter Rühren nacheinander einen Katalysator, Additive wie beispielsweise Hydrolyse- und Alterungsschutzmittel sowie den oder die Kettenverlängerer hinzu. Zum Schluss wird unter Rühren das Polyisocyanat hinzugeben. Durch die nun stattfindende exotherme Reaktion steigt die Temperatur des Reaktionsgemischs stark an. Gleichzeitig nimmt die Viskosität des Reaktionsgemischs mit fortschreitendem Reaktionsverlauf immer weiter zu, so dass die Reaktionsmischung im Regelfall dann ausgegossen wird, wenn sich die Reaktionstemperatur nach dem anfänglich starken Anstieg auf einen annähernd konstanten Wert eingependelt hat. Die einstufige Umsetzung der Komponenten wird als *One-Shot-Verfahren* (Einstufen-Verfahren) bezeichnet.

Bei größeren Ansätzen empfiehlt sich ein kontinuierlicher Prozess über einen Reaktionsextruder.

Des weiteren umfasst das erfindungsgemäße Flächengebilde eine Trägerlage. Die Auswahl des für die Trägerlage einzusetzenden textilen Materials erfolgt im Hinblick auf den jeweiligen Anwendungszweck bzw. die besonderen Qualitätsanforderungen. Geeignet sind zum Beispiel Gewebe, Gewirke, Gestricke oder dergleichen. Durch die Erfindung sind hier prinzipiell keinerlei Grenzen gesetzt. Der Fachmann kann hier leicht die für seine Anwendung geeignete Materialkombination auffinden. Vorzugsweise besteht die Trägerlage aus einem Vliesstoff.

Der Vliesstoff, aber auch die Fäden oder Garne der textilen Materialien können aus Chemiefasern oder aber auch aus Naturfasern bestehen. Als Chemiefasern kommen vorzugsweise Polyester-, Polyamid-, Celluloseregenerat- und/oder Bindefasern zum Einsatz, als Naturfasern Wolle- oder Baumwollfasern.

Die Chemiefasern können hierbei kräuselbar, gekräuselte und/oder ungekräuselte Stapelfasern, kräuselbare, gekräuselte und/oder ungekräuselte, direkt gesponnene Endlosfasern und/oder endliche Fasern, wie Meltblown-Fasern, umfassen. Die Trägerlage kann ein- oder mehrlagig aufgebaut sein.

Für die Herstellung des Vliesstoffs können die eingangs dargestellten Technologien eingesetzt werden. Das Verbinden der Fasern des Faserflors zu einem Vliesstoff kann hierbei mechanisch (konventionelles Vernadeln, Wasserstrahltechnik), mittels eines Bindemittels oder thermisch erfolgen. Hierbei reicht allerdings eine moderate Vliesstofffestigkeit der Trägerlage vor dem Bedrucken aus, da die Trägerlage beim Bedrucken mit dem Gemisch aus Bindemittel und thermoplastischem Polymer noch zusätzlich mit Bindemittel beaufschlagt und verfestigt wird. Für die moderaten Vliesstofffestigkeiten können auch kostengünstige Faserrohstoffe eingesetzt werden, vorausgesetzt, dass diese die Anforderungen an den Griff erfüllen. Auch kann die Prozessführung vereinfacht werden.

Im Falle der Verwendung von Stapelfasern ist es vorteilhaft, diese mit mindestens einer Krempel zu einem Faserffor zu kardieren. Bevorzugt ist hier eine Wirrlegung (Random-Technologie), doch auch Kombinationen aus Längs- und/oder Querlegung bzw. noch kompliziertere Krempelanordnungen sind möglich, wenn spezielle Vliesstoffeigenschaften ermöglicht werden sollen bzw. wenn mehrlagige Faserstrukturen gewünscht werden.

Besonders geeignet für Einlagestoffe sind Fasern mit einem Fasertiter bis 6,7 dtex. Gröbere Titer werden aufgrund ihrer großen Fasersteifigkeit normalerweise nicht eingesetzt. Bevorzugt sind Fasertiter im Bereich von 1,7 dtex, doch auch Mikrofasern mit einem Titer < 1 dtex sind denkbar.

Erfindungsgemäß ist die Haftmassenstruktur als zweilagige Haftmassenstruktur, umfassend eine unmittelbar auf dem Flächengebilde aufliegende Unterschicht sowie eine auf der Unterschicht angeordnete und die thermoplastische Polyurethan-Schmelzklebstoffzusammensetzung umfassende Oberschicht ausgebildet.

Die Unterschicht enthält hierbei ein Bindemittel und/oder ein thermoplastisches Polymer. Erfindungsgemäß handelt es sich bei dem Bindemittel und/oder dem thermoplastischen Polymeren um ein Polyurethan, wobei man in diesem Fall unter einem Polyurethan-Bindemittel ein Polymer mit einem Schmelzpunkt > 190 °C versteht, welches bei der Fixierung nicht zur Klebkraft beiträgt. Derartige doppelschichtige Haftmassenpunkte zeichnen sich durch einen geringen Haftmassenrückschlag aus, da die zuerst aufgebrachte Bindemittel enthaltende Schicht als Sperrschicht wirkt. Mischt man dem Unterpunkt ein thermoplastisches Polymer mit einen Schmelzpunkt <190 °C bei, erfindungsgemäß bevorzugt ein Polyurethan, so trägt dieses neben dem Oberpunkt zur Verklebung mit bei. Die Rückvernietung der Einlage wird hierbei jedoch verschlechtert.

Das Bindemittel kann ein Bindemittel des Acrylat- Styrolacrylat-, Ethylen-Vinylacetat,- Butadien-Acrylat, SBR-, NBR- und/oder Polyurethan-Typs sein oder ein Gemisch aus den oben genannten Substanzen. Vorzugsweise ist das Bindemittel in der Unterschicht in einer Menge von 5 Gew.% bis 70 Gew.% enthalten. Für das Bindemittel sind ebenfalls Polyesterpolyurethane, vorzugsweise aliphatische Polyesterpolyurethane, insbesondere die oben beschriebenen Polyesterpolyurethane zu bevorzugen, da sie eine ausgezeichnete Filmbildungseigenschaft haben und eine gute physikalische Wechselwirkung miteinander eingehen (filmbildend). Durch eine chemische Quervernetzung kann man den Wiederstand gegen Rückvernietung noch erhöhen. Dies ist dann vorteilhaft wenn Flexibilität und Elastizität weniger von Relevanz sind. Der Vorteil gegenüber z. B. Acrylatdispersionen sind die höhere Flexibilität und Elastizität, eine geringere bleibende Dehnung, niedrigere Vernetzungstemperaturen und die bessere Anbindung zur Polyurethan-Oberschicht.

In den wässrigen Unterpunktdispersionen können des Weiteren noch Hilfsstoffe enthalten sein, die u.a. zur Viskositätseinstellung und zum Laufverhalten der Paste beitragen. Durch eine geeignete Bindemittelzusammensetzung lässt sich die Haptik des Einlagestoffes in einem weiten Rahmen variieren.

Gemäß einer bevorzugten Ausführung der Erfindung enthält die Oberschicht das thermoplastische Polyurethan in einer Menge von 0,1 bis 20 g/m². Die Unterschicht enthält das thermoplastische Polyurethan vorzugsweise in einer Menge von 0,1 bis 20 g/m². Gemäß einer besonders bevorzugten Ausführungsform der Erfindung enthalten sowohl Oberschicht als auch Unterschicht das thermoplastische Polyurethan in einer Menge von vorzugsweise 2 bis 15 g/m². In dieser Ausführungsform wird eine besonders hohe Elastizität der Einlage erzielt.

Denkbar ist auch, dass die Oberschicht und/oder die Unterschicht neben dem thermoplastischen Polyurethan noch weitere thermoplastische Polymere enthalten. Die von dem thermoplastischen Polyurethan verschiedenen thermoplastischen Polymere können beispielsweise (Co)-Polyester-, (Co)-Polyamid-, Polyolefin-, Ethylenvinylacetat-basierende Polymere und/oder Kombinationen (Gemische und Copolymerisate) der genannten Polymere umfassen und in einem Beschichtungsgewicht von 0,1 bis 20 g/m² vorliegen.

Erfindungsgemäß wurde gefunden, dass durch geeignete Auswahl der Zusammensetzung des Unterpunkts ein Flächengebilde mit einer besonders guten Querelastizität erhalten werden kann. Praktische Versuche haben ergeben, dass sich die Zusammensetzung des Unterpunkts deutlich stärker auf die Querelastizität des Flächenbildes auswirkt als die des Oberpunkts.

Gemäß einer bevorzugten Ausführungsform wird, wie oben dargestellt, als Bindemittel mit einem Schmelzpunkt > 190 °C und/oder als thermoplastisches Polymer mit einem Schmelzpunkt < 190 °C in der Unterschicht ein Polyurethan eingesetzt. Dieses Polyurethan zeichnet sich bevorzugt durch eine geringe Shore-Härte und eine sehr flexible, elastische Struktur aus.
Das Polyurethan-Bindemittel und/oder das thermoplastische Polyurethan in der Unterschicht kann sowohl in reiner Form als auch in Abmischungen vorliegen. Um das Flächengebilde mit einer hohen Querelastizität auszustatten, hat es sich als vorteilhaft erwiesen, wenn der Polyurethan-Unterpunkt das Polyurethan-Bindemittel und/oder das thermoplastische Polyurethan in einer Menge von 10 bis 100 %, vorzugsweise 30 bis 100 %, noch bevorzugter 60 bis 100 %, jeweils bezogen auf die Gesamtmasse der Unterschicht enthält. Geeignete Polymere zur Abmischung sind insbesondere Polyacrylate, Ethylenvinylacetate, Butadien-Acrylate, Silikone, Styrol-Butadien-Kautschuke oder Nitril-Butadien-Kautschuke. Bevorzugte Polymere zum Abmischen des Polyurethans sind insbesondere selbstvernetzende Polyacrylate. Diese weisen vorzugsweise eine niedrige Glastemperatur von insbesondere 0 °C bis -20 °C auf.

Gemäß einer bevorzugten Ausführungsform handelt es sich bei dem Polyurethan-Bindemittel mit einem Schmelzpunkt > 190 °C um eine wässrige Polyurethandispersion.

Als Polyurethandispersionen können sowohl Polyester- als auch Polyetherpolyurethandispersionen verwendet werden. Für Anwendungen, die ein Polyurethan-Bindemittel mit niedrigem Glasübergangsbereich und/oder guter Hydrolysebeständigkeit erfordern, sind Polyetherpolyurethandispersionen zu bevorzugen. Für Anwendungen, die ein Polyurethan-Bindemittel mit guten mechanischen Eigenschaften wie z.B. Abrieb erfordern, sind Polyesterpolyurethandispersionen zu bevorzugen.

Als Polyurethandispersionen können sowohl aromatische als auch aliphatische Polyurethandispersionen verwendet werden. Aufgrund der Lichtechtheit von aliphatischen Isocyanaten sind aliphatische Polyurethandispersionen jedoch bevorzugt.

Der Feststoffgehalt der Polyurethandispersion kann zwischen 10% und 70%, bevorzugt zwischen 15% und 60% und besonders bevorzugt zwischen 20% und 60%, insbesondere zwischen 30% und 50%, liegen.

Die Stabilisierung der Polyurethandispersion kann durch interne und/oder externe anionische, kationische oder neutrale Emulgatoren erfolgen.

Der pH-Wert der Polyurethandispersion liegt vorzugsweise im Bereich von 4,0 bis 11,0, noch bevorzugter zwischen 5,0 und 10,0, noch bevorzugter zwischen 6 und 9.

Idealerweise zeichnen sich die Polyurethan-Bindemittel nach Verdampfen des Wassers und Verfilmen der Polyurethanpartikel durch gute mechanische Eigenschaften aus. Für eine Anwendung in der Unterschicht ist es zweckmäßig, wenn das Polyurethan-Bindemittel eine Shore Härte im Bereich von 50 bis 85 Shore A, bevorzugt von 50 bis 70 Shore A und besonders bevorzugt im Bereich von 55 bis 65 Shore A aufweist. Weiterhin ist es zweckmäßig, wenn das Polyurethan-Bindemittel über eine maximale Reißdehnung im Bereich von 400 bis 1200%, bevorzugt im Bereich von 600 bis 1200% und besonders bevorzugt im Bereich von 800 bis 1200% verfügt. Die Zugfestigkeit des Binders liegt vorteilhafterweise im Bereich zwischen 20 und 45 MPa und noch bevorzugter zwischen 25 und 45 MPa.

Das Polyurethan-Bindemittel verfügt idealerweise über eine gute Kälteflexibiltät. Der Glasübergangsbereich des Polyurethans liegt daher vorzugsweise bei kleiner 10 °C, noch bevorzugter zwischen -40 °C und + 10 °C und insbesondere zwischen -20°C und 0 °C.

Die Auftragung der Ober- und Unterschicht kann vorteilhaft in Form der klassischen Doppelpunktbeschichtung erfolgen. Zur Bildung des Unterpunkts können Polyurethan-Bindemittel in Form von Polyurethandispersionen eingesetzt werden. Diese können einen Schmelzpunkt > 190 °C aufweisen und somit bei der Fixierung nicht zur Verklebung mit beitragen. Vorteilhaft an einem solchen Binderunterpunkt ist, dass er auf einfache Weise beispielsweise weich, klebfrei, elastisch, filmbildend, verträglich mit weiteren Additiven, lichtecht (vergilbungsfrei) ausgebildet werden kann. Durch die Verwendung von Polyurethan-Bindemitteln wird des Weiteren die Anbindung zum Polyurethan Oberpunkt stark verbessert und dadurch die Trennkraft des Haftmassensystems gesteigert. Ein Binderunterpunkt bietet den Vorteil, dass er physikalisch oder chemisch vernetzt werden kann und die Rückvernietung dadurch erheblich reduziert wird.

Ferner kann der Unterpunkt thermoplastische Polymere enthalten, die einen Schmelzpunkt < 190 °C aufweisen und dadurch bei der Fixierung mit zur Verklebung beitragen. Ein Unterpunkt, der thermoplastische Polymere, vorzugsweise thermoplastisches Polyurethan, insbesondere aliphatisches Polyesterpolyurethan, enthält, unterstützt den Oberpunkt bei der Verklebung liefert aber auch einen höheren Rückvernietungswert. Durch die Verwendung von Polyurethanen im Unterpunkt erhält man eine wesentlich bessere Anbindung des Oberpunktes und kann somit sowohl die Trennkraft erhöhen als auch das Puderrieseln reduzieren. Vorteilhaft gegenüber z.B. Polyamiden ist eine stark verbesserte Verankerung zum Oberpunkt, eine höhere Elastizität und Flexibilität. Darüber hinaus wird die Klebkraft auf beschichteten Oberstoffen unterstützt.

Wie erläutert kann im Oberpunkt das thermoplastische Polyurethan beispielsweise mit den gängigen Thermoplasten abgemischt werden. Als besonders geeignet haben sich PA, PES, PP, PE, Ethylenvinylacetat, Copolymere, etc. erwiesen. Das thermoplastische Polyurethan kann auch mit den weiteren Thermoplasten zusammen extrudiert werden (Compound).

Auch beim Unterpunkt sind die verschiedensten Kombinationen möglich. So können Kombinationen mit gängigen Thermoplasten (PA/PES/Polyolefine, Ethylenvinylacetat, Copolymere etc.) als auch mit gängigen Bindern (Acrylatdispersionen, Silikondispersionen etc.) eingesetzt werden.

Für den Einlagebereich ist es vorteilhaft, wenn das thermoplastische Polyurethan als Granulat hergestellt wird, das eine gute Vermahlbarkeit aufweist. Sowohl für die Oberpunktfraktion (generell 80-200 µm) als auch für den Unterpunkt bzw. einen möglichen Pastenauftrag (0-80 µm) sollte zweckmäßigerweise eine Vermahlbarkeit in diesen Grenzen gegeben sein. Die vermahlenen Partikel sollten eine möglichst runde Geometrie aufweisen, um ein fehlerfreies Streuen bzw. eine fehlerfreie Einarbeitung und Ansinterung zu gewährleisten.

Die TPUs können erfindungsgemäß auch mit den anderen gängigen Beschichtungsmethoden im Einlagebereich, wie Pulverpunkt-, Pastendruck-, Doppelpunkt-, Streu-, Hotmeltverfahren, Scattering Coating, etc. eingesetzt werden. Hierzu werden zweckmäßigerweise andere Korngrößenverteilungen oder z.B. eine Pastenformulierung (TPUs in Pasten) eingesetzt.

Ebenfalls denkbar ist, dass zwischen Polyurethan-Oberschicht und Polyurethan/Binder-Unterschicht keine klare Phasengrenze zu erkennen ist. Dies kann beispielsweise dadurch bewirkt werden, dass das thermoplastische Polymer in Partikelform im Gemisch mit einem Bindemittel, beispielsweise in Form einer Dispersion, und ggf. noch weiteren Komponenten aufgetragen wird. Nach dem Auftragen wird das Bindemittel von den gröberen Partikeln separiert, wobei die gröberen Partikel mehr auf der Oberseite der Bindungsfläche, beispielsweise der Punktoberfläche, zum Liegen kommen. Das Bindemittel bindet neben seiner Funktion, sich in der Trägerlage zu verankern und diese zusätzlich zu binden, die gröberen Partikel. Gleichzeitig kommt es zu einer teilweisen Trennung von Partikeln und Bindemittel an der Oberfläche der Trägerlage. Das Bindemittel dringt tiefer in das Material ein, während sich die Partikel an der Oberfläche anreichern. Dadurch sind die gröberen Polymerpartikel in der Bindemittelmatrix zwar eingebunden, gleichzeitig steht ihre freie (Ober-)Fläche an der Oberfläche des Vliesstoffs aber zur direkten Verklebung mit dem Oberstoff zur Verfügung. Es kommt zur Ausbildung einer doppelpunktähnlichen Struktur, wobei zur Erzeugung dieser Struktur im Gegensatz zum bekannten Doppelpunktverfahren aber nur ein einziger Verfahrensschritt erforderlich ist und auch das aufwändige Absaugen überschüssigen Pulvers entfällt. Die Einlagen erhalten auf diese Weise eine höhere Elastizität und ein höheres Rücksprungvermögen als diejenigen mit herkömmlichen Polymeren auf Polyamid- oder Polyesterbasis.

Der Doppelpunkt auf der Basis einer, vorzugsweise wässrigen, Dispersion als Unterpunkt und einem Streupuder als Oberpunkt, wird vorzugsweise, wie oben beschrieben, in einem Punktmuster auf die Trägerlage aufgebracht. Damit wird die Weichheit und die Sprungelastizität des Materials verstärkt. Das Punktmuster kann regulär oder irregulär verteilt sein. Die Bedruckung ist aber keinesfalls auf Punktmuster beschränkt. Der Doppelpunkt oder die Paste können in beliebigen Geometrien aufgebracht werden, z.B. auch in Form von Linien, Streifen, netz- oder gitterartigen Strukturen, Punkten mit rechteckiger, rautenförmiger oder ovaler Geometrie oder dergleichen.

Ein bevorzugtes Verfahren zur Herstellung eines erfindungsgemäßen thermisch fixierbaren Flächengebildes umfasst die folgenden Maßnahmen:
a) Bereitstellen einer Trägerlage,
b) Auftragen einer Haftmassenstruktur, umfassend eine Polyurethan-Schmelzklebstoffzusammensetzung, welche ein thermoplastisches Polyurethan in Form eines Umsetzungsprodukts von
   - mindestens einem bifunktionellen Polyisocyanat (A) mit einem Isocyanatgehalt von 5 bis 50 Gew.-Anteilen, vorzugsweise 5 bis 25 Gew.-Anteilen mit
   - mindestens einem Polyol (B) ausgewählt aus der Gruppe bestehend aus Polyesterpolyol, Polyetherpolyol, Polycaprolactonpolyol, Polycarbonatpolyol, Copolymer aus Polycaprolactonpolyol Polytetrahydrofuran und Gemischen hiervon sowie gegebenenfalls
   - mit mindestens einem Kettenverlängerer (C), enthält, auf ausgewählte Flächenbereiche der Trägerlage und
c) Temperaturbehandlung der aus Schritt b) erhaltenen Trägerlage zum Auf- und Zusammensintern des thermoplastischen Polymers auf der/mit der Oberfläche der Trägerlage.

Vorzugsweise wird die Haftmassenstruktur als zweischichtige Haftmassenstruktur, wie oben erläutert, mit Unter- und Oberschicht gebildet. Zur Bildung der Unterschicht kann auf dem Flächengebilde zunächst zweckmäßigerweise ein Bindemittel und/oder ein thermoplastisches Polymer, vorzugsweise in Form einer wässrigen Dispersion aufgebracht werden. Auf diese kann anschließend das thermoplastische Polyurethan, vorzugsweise in Form eines Streupuders, aufgebracht werden.

Die Trägerlage aus einem textilen Material bzw. aus Vliesstoff kann direkt in einer Druckmaschine mit der Haftmassenstruktur, bedruckt werden. Dazu kann es eventuell sinnvoll sein, die Trägerlage vor dem Druckvorgang mit textilen Hilfsmitteln wie Verdicker (beispielsweise partiell vernetzte Polyacrylate und deren Salze), Dispergatoren, Netzmittel, Laufhilfsmittel, Griffmodifikatoren zu benetzen oder auf beliebige andere Art so zu behandeln, dass der Druckprozess produktionssicherer wird.

Ein weiterer Gegenstand der Erfindung ist die Verwendung des erfindungsgemäßen Flächengebildes als Einlagestoff zur Fixierung an einem Oberstoff, vorzugsweise mit einer Luftdurchläßigkeit < 100 dm³/s*m² bei einem Prüfdruck von 200 Pa gemessen in Anlehnung an EN ISO 9237.

Als besonders geeignet hat sich das Flächengebilde zur Fixierung an einem Oberstoff erwiesen, der zumindest auf der dem Einlagestoff zugewandten Seite eine Beschichtung aus Silikon, Fluorcarbon oder Polyurethan aufweist.

Erfindungsgemäß können die verschiedensten Oberstoffe eingesetzt werden. Als besonders geeignet hat sich das erfindungsgemäße Flächengebilde jedoch in Kombination mit schwer fixierbaren Oberstoffen, wie hydrophob ausgerüstetetem (oleophob) PES-, Baumwolle- oder Batist-Oberstoffen (hydrophobe Ausrüstung) oder glatten, beschichteten Oberstoffen erwiesen.

Der Einsatz eines erfindungsgemäßen thermisch fixierbaren Flächengebildes ist jedoch nicht auf diese Anwendung beschränkt. Auch andere Anwendungen sind denkbar, beispielsweise als fixierbare textile Flächengebilde bei Heimtextilien wie Polstermöbeln, verstärkten Sitzkonstruktionen, Sitzbezügen oder als fixierbares und dehnfähiges textiles Flächengebilde in der Automobilausstattung, bei Schuhkomponenten oder im Bereich Hygiene/Medikal.

Nachfolgend wird die Erfindung ohne Beschränkung der Allgemeinheit am Beispiel der Verwendung eines erfindungsgemäßen thermisch fixierbaren Flächengebildes als fixierbarer Einlagestoff in der Textilindustrie beschrieben.

### Ausführungsbeispiele

### Beispiel 1

### Herstellung einer thermoplastischen TPU-Haftmasse

1000,0 g Polyesterpolyol (1,4-Butandioladipat, OH-Zahl: 56, Funktionalität: 2) wurden in einem 3-L-Blecheimer vorgelegt und in einer Evakuierstation bei 90 °C unter Vakuum für zwei Stunden entgast und entwässert. Anschließend wurde das Polyol mittels einer Heizplatte auf 100 °C erwärmt. Unter gutem Rühren wurden nacheinander 0,02 g des Katalysators Dabco T95, 33.1 g eines Kettenverlängerer-Gemischs aus 1,4-Butandiol und 2,3-Butandiol im Verhältnis 80:20, 5.9 g des Hydrolyseschutzmittels Stabaxol P200 und 140.0 g des Isocyanats 1,6-Hexamethylendiisocyanat hinzugegeben, Nach Zugabe des Diisocyanats startete die stark exotherme Reaktion, was zu einem raschen Anstieg der Reaktionstemperatur bei gleichzeitiger Erhöhung der Viskosität des Reaktionsgemischs führte. Im beschriebenen Fall erfolgte das Ausgießen der Reaktionsmischung nach Erreichen eines annähernd konstanten Temperaturmaximums. Hierzu wurde der Eimerinhalt in eine Grießform aus Teflon-Folie gegossen, die auf einer 100 °C warmen Heizplatte stand. Nach 30 Minuten bei 100 °C war die Mischung ausreagiert.

Es wurde ein Polyurethan mit einer Shore-Härte von 85°A und einem Schmelzbereich von 105 bis 115 °C erhalten.

### Beispiel 2

### Herstellung einer thermoplastischen TPU-Haftmasse

1000,0 g Polyesterpolyol (1,4-Butandioladipat, OH-Zahl: 56, Funktionalität: 2) wurden in einem 3-L-Blecheimer vorgelegt und in einer Evakuierstation bei 90 °C unter Vakuum für zwei Stunden entgast und entwässert. Anschließend wurde das Polyol mittels einer Heizplatte auf 100 °C erwärmt. Unter gutem Rühren wurden nacheinander 0,02 g des Katalysators Dabco T95, 33.2 g des Kettenverlängerers 1,4-Butandiol, 5,9 g des Hydrolyseschutzmittels Stabaxol P200 und 140.0 g des Isocyanats 1,6-Hexamethylendiisocyanat hinzugegeben. Nach Zugabe des Diisocyanats startete die stark exotherme Reaktion, was zu einem raschen Anstieg der Reaktionstemperatur bei gleichzeitiger Erhöhung der Viskosität des Reaktionsgemischs führt. Im beschriebenen Fall erfolgte das Ausgießen der Reaktionsmischung nach Erreichen eines annähernd konstanten Temperaturmaximums. Hierzu wurde der Eimerinhalt in eine Gießform aus Teflon-Folie gegossen, die auf einer 100 °C warmen Heizplatte steht. Nach 30 Minuten bei 100 °C war die Mischung ausreagiert.

Es wurde ein Polyurethan mit einer Shore-Härte von 87°A und einem Schmelzbereich von 110 bis 120 °C erhalten.

### Beispiel 3

### Herstellen eines Flächengebildes

Eine Vliesstoffbasis aus 85% Polyamid und 15 % Polyester mit einem Flächengewicht von 18 g/m² wurde nach dem bekannten Doppelpunktverfahren beschichtet. Dabei wurde für den Unterpunkt ein Binder eingesetzt, der neben den gängigen Hilfsstoffen, wie Emulgatoren, Verdicker und Prozeßhilfsmittel auch ein filmbildendes Polyesterpolyurethan (Auflage: 2,5 g/m²) enthielt. Auf den noch nassen Unterpunkt wurde als Oberpunkt ein aliphatisches Polyesterpolyurethan mit einem Schmelzpunkt von 108 - 116 °C und einem MFI-Wert von 25 (g/10 Minuten bei 160 °C / Belastung von 2,16 kg) aufgestreut, der Überschuss abgesaugt und anschließend bei 185 °C getrocknet (Auflage: 5 g/m²). Analog dazu wurde auf die gleiche Basis ein Acrylat-Binderunterpunkt aufgebracht und mit einem Polyamidstreupuder versehen. Der Schmelzpunkt des Polyamids beträgt 108-112 °C bei einem MFI-Wert von 49 (g/10 Minuten bei 160 °C / Belastung von 2,16 kg). Diese Einlagen wurden mit einer Temperatur von 120 °C für 12 sec. und einem Druck von 2,5 bar fixiert (Presse: Multistar 1000 CU). Als Stoff diente ein Polyurethan beschichteter Oberstoff (J.L. Ball Artikel: 31198). In nachfolgender Tabelle ist die Primärtrennkraft, die Trennkraft nach chemischer Reinigung und die Trennkraft nach einer 60°C-Wäsche dargestellt.

**Tab.1**

| | Polyamid-Haftmassensystem | PU-Haftmassensystem |
|---|---|---|
| Primärhaftung [N/5 cm] | 0,7 | 10,7 |
| 1xchemische Reinigung [N/5 cm] | 0,4 | 8,7 |
| 1x60°C-Wäsche [N/5cm] | 0,2 | 9,5 |

### Beispiel 4

### Herstellung eines Flächengebildes auf Vliesstoffbasis

Eine Vliesstoffbasis aus 100 % Polyester mit einem Flächengewicht von X g/m² wurde nach dem bekannten Doppelpunktverfahren beschichtet. Dabei wurde für den Unterpunkt ein Binder eingesetzt, der neben den gängigen Hilfsstoffen, wie Emulgatoren, Verdicker und Prozeßhilfsmittel auch ein filmbildendes Polyesterpolyurethan (Auflage: 1,8 g/m²) enthielt. Auf den noch nassen Unterpunkt wurde als Oberpunkt ein aliphatisches Polyesterpolyurethan mit einem Schmelzpunkt von 98-108 °C und einem MFI-Wert von 56 (g/10 Minuten bei 160 °C / Belastung von 2,16 kg) aufgestreut, der Überschuss abgesaugt und anschließend bei 185 °C getrocknet (Auflage: 5,4 g/m²). Analog dazu wurde auf die gleiche Basis ein Acrylat-Binderunterpunkt mit thermoplastischen Polymeren auf Polyamid und Polesterbasis aufgebracht und mit einem Polyamidstreupuder versehen. Der Schmelzpunkt des Polyamids beträgt 108-112 °C bei einem MFI-Wert von 49 (g/10 Minuten bei 160 °C / Belastung von 2,16 kg). Diese Einlagen wurden mit einer Temperatur von 120 °C für 12 sec. und einem Druck von 2,5 bar fixiert (Presse: Multistar 1000 CU). Als Stoff wurde neben einem beschichteten Oberstoff (J.L. Ball Artikel: 31050) auch noch ein konventioneller Oberstoff auf Polyetser/Baumwollbasis (65%/35%) ausgesucht, der im Labor als Standardoberstoff eingesetzt wird, weil dieser repräsentativ für eine große Reihe von konventionellen Oberstoffen steht. In nachfolgender Tabelle ist die Primärtrennkraft und die Trennkraft nach einer 60°C-Wäsche auf beiden Oberstoffen dargestellt.

**Tab.2**

| | Polyamid-Haftmassensystem | Polyurethan-Haftmasensystem |
|---|---|---|
| Primärhaftung PES/BW [N/5cm] | 3,3 | 4,6 |
| Primärhaftung beschichteter Oberstoff [N/5cm] | 0,3 | 7,1 |
| 1x60°C-Wäsche PES/BW [N/5cm] | 2,7 | 3,7 |
| 1x60°C-Wasche beschichteter Oberstoff [N/5cm] | 0 | 4,6 |

Aus obigen Beispiel wird ersichtlich, dass bei maßgeschneiderten Polyurethan-Haftmassensystemen, die Klebkraft nicht nur auf schwer zu fixierenden, beschichteten Oberstoffen stark verbessert werden kann, sondern ebenfalls eine mindenstens gleichwertige Performance zu gängigen Polyamid oder Polyester-Systemen auf konventionellen, unbeschichteten Oberstoffen erreicht werden kann.

### Beispiel 5

### Herstellung eines Flächengebildes auf Gewirkobasis

Eine Gewirkebasis (100 % Polyester) mit 22 g/m² Flächengewicht wird nach dem bekannten Doppelpunktverfahren beschichtet. Hierbei wure zum einen auf ein "Standard"-Haftmassensystem mit einem thermoplastischen Unterpunkt und Polyamid als Streupuder und zum anderen auf ein Doppelpunktsystem mit einem Polyurethanbinderunterpunkt und einem aliphatischen Polyesterpolyurethan-Streupuder. Dabei wurden für die Unterpunkte Pasten eingesetzt, die mit den üblichen Hilfsstoffen, wie Emulgator, Verdicker und Prozeßhilfsmitteln angesetzt waren. Im Falle des thermoplastisches Binderunterpunktes enthielt die Paste neben einem Acrylatbinder noch thermoplastische Polymere auf Polyamid- und Polyesterbasis. Als Oberpunkt wurde ein Polyamid mit einem Schmelzpunkt von 113 °C und einem MFI-Wert von 71 (g/10 min) (ermittelt bei 160 °C unter einer Belastung von 2,16 kg) aufgetreut. Die TPU-Paste enthält neben den Standardkomponenten eine Binderkomponente in Form einer aliphatischen Polyesterpolyurethan-Dispersion. Als Streupuder für den Oberpunkt wurde hier ein thermoplastisches, aliphatisches Polyesterpolyurethan mit einem Schmelzpunkt von 112 °C und einem MFI-Wert von 25 (g/10 min) (ermittelt bei 160 °C unter einer Belastung von 2,16 kg) aufgetragen.

Im Beschichtungsprozeß wurden 2,5 g Unterpunktbinderpaste aufgetragen und mit 5 g Streupuder belegt. Diese Einlagen wurden mit einer Temperatur von 130 °C für 12 sec. und einem Druck von 2,5 bar fixiert (Presse. Kannegiesser EXT 1000 CU). Als Stoff diente ein Polyurethan beschichteter Oberstoff (J.L. Ball Artikel: 31198). In nachfolgender Tabelle ist die Primärtrennkraft, die Trennkraft nach chemischer Reinigung und die Trennkraft nach einer 60°C-Wäsche dargestellt.

**Tab.3**

| | Polyamid-Haftmassensytem | PU-Haftmassensytem |
|---|---|---|
| Primärhaftung [N/10cm] | 2,4 | 23,5 |
| 1xchemische Reinigung [N/10 cm] | 0,8 | 21,9 |
| 1x60°C-Wäsche [N/10cm] | 0 | 17,2 |

Aber auch auf "konventionellen", nicht beschichteten Oberstoffen weisen die Polyurethane analoge Klebkräfte auf wie die bekannten Polymersysteme auf z.B. Polyamid- oder Polyesterbasis.

### Beispiel 6

### Luftdurchläßigkeitsmessungen

In Anlehnung an EN ISO 9237 mit folgenden Abweichungen:
- Keine Konditionierung
- Normklima nach DIN 50014/ISO 554
- Prüfergebnis in dm³/s*m²

Prüfgerät: Textex FX 3300
Prüfdruck: 50 Pa, 100 Pa oder 200 Pa
Probenbreite: 10 cm

Es wurden Luftdurchläßigkeitsmessungen mit zwei schwer zu fixierenden polyurethanbeschichteten Oberstoffen und mit zwei konventionellen, unbeschichteten Referenzoberstoffen durchgeführt. Die Ergebnisse sind in nachfolgender Tabelle dargestellt:

**Tab.4**

| | **Luftdurchläßigkeit in dm³/s*m²** | | | |
|---|---|---|---|---|
| Prüfdruck [Pa] | Batist | PES/BW blau | J.L de Ball (Artikel: 31050) | J.L de Ball (Artikel: 31198) |
| 50 | 61,9 | 7,9 | 1,9 | 0 |
| 100 | 117 | 15,6 | 3,6 | 0 |
| 200 | 226 | 32,2 | 6,9 | 0 |

Aus den Ergebnissen wird ersichtlich, dass die beiden beschichteten Oberstoffe eine sehr viel geringere Luftduchläßigkeit aufweisen, als die beiden unbeschichteten Oberstoffe. Durch die geschlossene, glatte Funktionsschicht wird ein Luftdurchtritt nahezu verhindert. Die Folge der glatten funktionellen Schicht ist eine extrem schwer zu verklebende Oberfläche. Die Oberflächenschicht kann hierbei aus den verschiedensten Materialien aufgebaut sind, wie z.B. auf Polyurethanbasis, auf Fluorcarbonbasis oder Silikonbasis.

### Beispiel 7

### Durchführung von Hysteresemessungen

Prüfung an einer Zwickmaschine mit folgenden Variablen:
Zugrichtung Vlies: Quer
Proben breite: 50 mm
Einspannlänge: 200 mm
Vorkraft: 0,05 N
Geschwindigkeit-Zyklus: 500 mm/min.
Prüfklima: 22 °C/ 50 % rel. Feuchte

An drei mit dem Doppelpunktverfahren beschichteten Fließstoffproben mit einem Flächengewicht von 18 g/m² aus 85 % Polyamid und 15 % Polyester wurden Hysteresemessungen durchgeführt. Hierbei wurde die Elastizität in Querrichtung bestimmt. Einlage 1 wurde hierbei mit einem System aus Polyurethan-Binderunterpunkt und Polyurethan-Hafttmasse beschichtet. Einlage 2 weist einen Acrylatunterpunkt und einen Polyamidoberpunkt auf. Beide Einlagen sind mit 7,5 g/m² Haftmasse beschichtet (2,5 + 5 g/m²). Einlage 3 entspricht in seiner Beschichtung Einlage 1 nur das die Auflage mit 11 g/m² erhöht ist (5 + 6 g/m²).
Die Hysteresemessungen wurden an einer Zwickmaschine auf zweierlei Weise an den erfindungsgemäßen Flächengebilden durchgeführt:
1) Lageregelung bis 25 % Dehnung (oberer Umkehrpunkt)
2) Kraftregelung bis 2 N (oberer Umkehrpunkt)

Die Messergebnisse sind in den Tabellen 5 bis 7 dargestellt.

Zu 1) Bei der Lageregelung kann man deutlich erkennen, dass Einlage 1 mit dem Polyurethan-Haftmassensystem eine wesentlich geringere bleibende Dehnung hat und folglich wesentlich elastischer ist als Einlage 2 mit der Polyamid-Haftmasse, Bei der Einlage 2 lässt sich deutlich erkennen, dass die bleibende Dehnung wesentlich höher ist und der Wert sowohl im einzelnen Zyklus als auch über die 5 Zyklen hinweg stärker abnimmt. Bei der Einlage 1 verändert sich hingegen die bleibende Dehnung über den Zyklus nur gering. Diese beiden Effekte werden durch eine Erhöhung der Auflage des Polyurethan-Haftmassensystems (Einlage 3) noch verstärkt.

Zu 2) Bei der Kraftregelung sind die gleichen Effekte zu beobachten. Die bleibende Dehnung bei Einlage 2 ist wesentlich höher als bei den Polyurethan beschichteten Einlagen 1 und 3. Die bleibende Dehnung bei Einlage 2 während der 5 Messreihen ist mit 15 - 20 % wesentlich höher und fällt auch innerhalb eines Messzyklus wesentlich stärker ab als bei den Polyurethan beschichteten Einlagen 1 und 3. (Rechtsverschiebung der Messkurven). Der Effekt des Elastizitätsgewinns durch eine Erhöhnug der elastisch wirkenden Polyurethan-Punktbeschichtung wird ebenfalls noch einmal bestätigt (Vergleich Einlage 1 mit Einalge 3).

Die Messergebnisse sind in den Tabellen 8 bis 10 dargestellt.

### Hysteresemessung von Einlage 1

**Tabelle 5**

| Nr | Index | bleibende Dehnung % | Kraft 5% Belastung N | Kraft 10% Belastung N | Kraft 20% Belastung N |
|---|---|---|---|---|---|
| 1 | 1 | 7,11 | 0,49 | 0,96 | 1,85 |
| | 2 | 8,22 | | 0,23 | 1,20 |
| | 3 | 8,81 | | 0,17 | 1,09 |
| | 4 | 9,23 | | 0,13 | 1,03 |
| | 5 | 9,59 | | 0,11 | 0,98 |
| 2 | 1 | 7,07 | 0,46 | 0,91 | 1,77 |
| | 2 | 8,28 | | 0,22 | 1,15 |
| | 3 | 8,78 | | 0,16 | 1,03 |
| | 4 | 9,28 | | 0,13 | 0,97 |
| | 5 | 9,57 | | 0,10 | 0,93 |
| 3 | 1 | 6,88 | 0,49 | 0,98 | 1,90 |
| | 2 | 7,98 | | 0,25 | 1,26 |
| | 3 | 8,61 | 8,61 | 0,18 | 1,13 |
| | 4 | 9,11 | | 0,15 | 1,06 |
| | 5 | 9,29 | | 0,12 | 1,02 |
| 4 | 1 | 6,79 | 0,52 | 1,01 | 1,97 |
| | 2 | 7,88 | | 0,25 | 1,29 |
| | 3 | 8,54 | | 0,19 | 1,16 |
| | 4 | 8,91 | | 0,15 | 1,09 |
| | 5 | 9,29 | | 0,13 | 1,05 |
| 5 | 1 | 7,31 | 0,46 | 0,91 | 1,79 |
| | 2 | 8,53 | | 0,21 | 1,16 |
| | 3 | 8,91 | | 0,15 | 1,04 |
| | 4 | 9,54 | | 0,13 | 0,99 |
| | 5 | 9,81 | | 0,09 | 0,94 |

### Hysteresemessung von Einlage 2

**Tabelle 6**

| Nr | Index | bleibende Dehnung % | Kraft 5% Belastung N | Kraft 10% Belastung N | Kraft 20% Belastung N |
|---|---|---|---|---|---|
| 1 | 1 | 11,04 | 0,32 | 0,58 | 1,22 |
| | 2 | 12,54 | | | 0,73 |
| | 3 | 12,97 | | | 0,65 |
| | 4 | 13,40 | | | 0,61 |
| | 5 | 13,71 | | | 0,58 |
| 2 | 1 | 11,09 | 0,27 | 0,55 | 1,20 |
| | 2 | 12,36 | | | 0,11 |
| | 3 | 13,06 | | | 0,63 |
| | 4 | 13,54 | | | 0,59 |
| | 5 | 13,92 | | | 0,56 |
| 3 | 1 | 12,19 | 0,23 | 0,40 | 0,85 |
| | 2 | 13,35 | | | 0,50 |
| | 3 | 13,93 | | | 0,44 |
| | 4 | 14,34 | | | 0,41 |
| | 5 | 14,92 | | | 0,39 |
| *4 | 1 | 12,51 | 0,21 | 0,39 | 0,81 |
| | 2 | 13,71 | | | 0,47 |
| | 3 | 14,23 | | | 0,42 |
| | 4 | 14,75 | | | 0,39 |
| | 5 | 14,99 | | | 0,37 |
| 5 | 1 | 11,97 | 0,22 | 0,40 | 0,86 |
| | 2 | 13,37 | | | 0,52 |
| | 3 | 14,38 | | | 0,46 |
| | 4 | 14,25 | | | 0,42 |
| | 5 | 14,90 | | | 0,41 |

### Hysteresemessung von Einlage 3

**Tabelle 7**

| Nr | Index | bleibende Dehnung % | Kraft 5% Belastung N | Kraft 10% Belastung N | Kraft 20% Belastung N |
|---|---|---|---|---|---|
| 1 | 1 | 6,11 | 0,83 | 1,56 | 2,85 |
| | 2 | 7,08 | | 0,41 | 9,91 |
| | 3 | 7,72 | | 0,31 | 1,73 |
| | 4 | 8,08 | | 0,26 | 1,63 |
| | 5 | 8,41 | | 0,22 | 1,58 |
| 2 | 1 | 6,13 | 0,80 | 1,56 | 2,90 |
| | 2 | 7,22 | | 0,41 | 1,96 |
| | 3 | 7,81 | | 0,30 | 1,78 |
| | 4 | 8,27 | | 0,25 | 1,68 |
| | 5 | 8,62 | | 0,21 | 1,62 |
| 3 | 1 | 6,27 | 0,70 | 1,37 | 2,61 |
| | 2 | 7,36 | | 0,35 | 1,75 |
| | 3 | 7,91 | | 0,26 | 1,59 |
| | 4 | 8,34 | | 0,22 | 1,50 |
| | 5 | 8,62 | | 0,19 | 1,44 |
| 4 | 1 | 6,34 | 0,72 | 1,39 | 2,64 |
| | 2 | 7,35 | | 0,35 | 1,76 |
| | 3 | 8,01 | | 0,27 | 1,60 |
| | 4 | 8,41 | | 0,21 | 1,52 |
| | 5 | 8,79 | | 0,19 | 1,47 |
| 5 | 1 | 6,35 | 0,68 | 1,33 | 2,55 |
| | 2 | 7,35 | | 0,34 | 1,72 |
| | 3 | 8,01 | | 0,26 | 1,56 |
| | 4 | 8,36 | | 0,21 | 1,48 |
| | 5 | 8,64 | | 0,19 | 1,42 |

### Hysteresemessung von Einlage 1

**Tabelle 8**

| Nr | Index | bleibende Dehnung % | Nr | Index | bleibende Dehnung % |
|---|---|---|---|---|---|
| 1 | 1 | 6,32 | | 4 | 7,68 |
| | 2 | 7,61 | | 5 | 8,09 |
| | 3 | 8,28 | 4 | 1 | 6,39 |
| | 4 | 8,95 | | 2 | 7,49 |
| | 5 | 9,49 | | 3 | 8,39 |
| 2 | 1 | 6,14 | | 4 | 8,87 |
| | 2 | 7,22 | | 5 | 9,39 |
| | 3 | 7,92 | 5 | 1 | 6,62 |
| | 4 | 8,53 | | 2 | 7,99 |
| | 5 | 9,02 | | 3 | 8,70 |
| 3 | 1 | 5,40 | | 4 | 9,31 |
| | 2 | 6,49 | | 5 | 9,82 |
| | 3 | 7,14 | | | |

### Hysteresemessung von Einlage 2

**Tabelle 9**

| Nr | Index | bleibende Dehnung % | Nr | Index | bleibende Dehnung % |
|---|---|---|---|---|---|
| 1 | 1 | 19,77 | | 4 | 24,34 |
| | 2 | 22,18 | | 5 | 25,19 |
| | 3 | 23,50 | 4 | 1 | 14,96 |
| | 4 | 24,63 | | 2 | 16,73 |
| | 5 | 25,27 | | 3 | 17,99 |
| 2 | 1 | 17,84 | | 4 | 18,90 |
| | 2 | 19,58 | | 5 | 19,24 |
| | 3 | 20,71 | | 1 | 15,32 |
| | 4 | 21,90 | 5 | 2 | 17,10 |
| | 5 | 22,23 | | 3 | 18,13 |
| 3 | 1 | 19,70 | | 4 | 18,93 |
| | 2 | 22,01 | | 5 | 19,70 |
| | 3 | 23,53 | | | |

### Hysteresemessung von Einlage 3

**Tabelle 10**

| Nr | Index | bleibende Dehnung % | Nr | Index | bleibende Dehnung % |
|---|---|---|---|---|---|
| 1 | 1 | 3,74 | | 4 | 6,41 |
| | 2 | 4,56 | | 5 | 6,11 |
| | 3 | 5,05 | 4 | 1 | 4,28 |
| | 4 | 5,36 | | 2 | 5,02 |
| | 5 | 5,78 | | 3 | 5,50 |
| 2 | 1 | 4,11 | | 4 | 5,91 |
| | 2 | 4,95 | | 5 | 6,27 |
| | 3 | 5,44 | 5 | 1 | 4,06 |
| | 4 | 5,96 | | 2 | 5,05 |
| | 5 | 6,19 | | 3 | 5,62 |
| 3 | 1 | 4,18 | | 4 | 5,94 |
| | 2 | 5,05 | | 5 | 6,32 |
| | 3 | 5,41 | | | |

## Patentansprüche

1. Thermisch fixierbares Flächengebilde, insbesondere verwendbar als fixierbarer Einlagestoff in der Textilindustrie mit einer Trägerlage aus einem textilen Material, auf welcher eine Haftmassenstruktur, aufgebracht ist, wobei die Haftmassenstruktur eine Polyurethan-Schmelzklebstoffzusammensetzung umfasst, welche ein thermoplastisches Polyurethan in Form eines Umsetzungsprodukts von
- mindestens einem bifunktionellen, vorzugsweise aliphatischen, cycloaliphatischen oder aromatischen, Polyisocyanat (A) mit einem Isocyanatgehalt von 5 bis 65 Gew.-Anteilen mit
- mindestens einem Polyol (B) ausgewählt aus der Gruppe bestehend aus Polyesterpolyol, Polyetherpolyol, Polycaprolactonpolyol, Polycarbonatpolyol, Copolymer aus Polycaprolactonpolyol Polytetrahydrofuran und Gemischten hiervon sowie gegebenfalls mit
- mindestens einem Kettenverlängerer (C) enthält,
**dadurch gekennzeichnet, dass** die Haftmassenstruktur als zweilaqige Haftmassenstruktur, umfassend eine unmittelbar auf dem Flächengebilde aufliegende Unterschicht sowie eine auf der Unterschicht angeordnete und die thermoplastische Polyurethan-Haftmasse umfassende Oberschicht ausgebildet ist, wobei die Unterschicht ein Polyurethan als Binder mit einem Schmelz unkt > 190 °C und/oder ein thermoplastisches Polyurethan mit einem Schmelztpunkt < 190 °C enthält.

2. Thermisch fixierbares Flächengebilde nach Anspruch 1, **dadurch gekennzeichnet dass** das Polyol (B) ausgewählt ist aus der Gruppe bestehend aus einem Polyesterpolyol mit einem Molekulargewicht von 400 g/mol bis 6000 g/mol, einem Polyetherpolyol mit einem Molekulargewicht von 400 g/mol bis 6000 g/mol, einem Polycaprolactonpolyol mit einem Molekulargewicht von 450 g/mol bis 6000 g/mol, einem Polycarbonatpolyol mit einem Molekulargewicht von 450 g/mol bis 3000 g/mol, einem Copolymer aus Polycaprolactonpolyol und Polytetrahydrofuranpolyol mit einem Molekulargewicht von 800 g/mol bis 4000 g/mol und Gemischen hiervon.

3. Thermisch fixierbares Flächengebilde nach einem der vorhergehenden Ansprüche, **dadurch gekennzeichnet dass** das bifunktionelle Polyisocyanat (A) C_{4-C18} aliphatische und/oder C₆₋₂₀ cycloaliphatische und/oder C₆₋₂₀ aromatische Diisocyanate mit Isocyanatgehalten von 5 bis 65 Gew.-Anteilen umfasst.

4. Thermisch fixierbares Flächengebilde nach einem der vorhergehenden Ansprüche, **dadurch gekennzeichnet dass** der Kettenverlängerer ausgewählt ist aus der Gruppe bestehend aus Ethylenglykol, 1,2-Propandiol, 1,3-Propandiol, 1,4-butandiol, 1,3-Butandiol, 2,3-Butandiol, deren Isomerengemischen, 1,5-Pentandiol sowie dessen Isomeren, Cyclohexandimethanol (CHDM) 1,6-Hexandiol sowie dessen Isomeren und Gemischen hiervon.

5. Thermisch fixierbares Flächengebilde nach einem der vorhergehenden Ansprüche, **dadurch gekennzeichnet dass** die Umsetzung der Komponenten A, B und C in Gegenwart von mindestens einem Katalysator, mindestens einem Hydrolyse- und/oder mindestens einem Alterungsschutzmittel erfolgt.

6. Thermisch fixierbares Flächengebilde nach einem der vorhergehenden Ansprüche, **dadurch gekennzeichnet dass** die Umsetzung der Komponenten A, B und C in einem Mengenverhältnis von A zu B+C entsprechend einem molaren Verhältnis von NCO zu OH von 0,7 bis 1,0 vorzugsweise 0,9 bis 1,0 und besonders bevorzugt 0,94 bis 0,98 erfolgt.

7. Thermisch fixierbares Flächengebilde nach einem der vorhergehenden Ansprüche, **dadurch gekennzeichnet dass** die Umsetzung der Komponenten A, B und C in einem Mengenverhältnis von A zu B+C, entsprechend einem molaren Verhältnis von NCO zu OH, von 0,7 bis 1,0 vorzugsweise 0,8 bis 0,9 und besonders bevorzugt 0,85 bis 0,89 erfolgt,

8. Thermisch fixierbares Flächengebilde nach einem der vorhergehenden Ansprüche, **dadurch gekennzeichnet dass** der Schmelzbereich der thermoplastischen Polyurethan-Schmelzklebstoffzusammensetzung zwischen 60°C bis190 °C und bevorzugt zwischen 100 °C bis140 °C liegt.

9. Thermisch fixierbares Flächengebilde nach einem der vorhergehenden Ansprüche, **dadurch gekennzeichnet dass** dass das textile Material ein Gewebe, Gewirke, Gestrick oder Vliesstoff ist.

10. Thermisch fixierbares Flächengebilde nach einem der vorhergehenden Ansprüche, **dadurch gekennzeichnet, dass** das von dem thermoplastischen Polyurethan verschiedene thermoplastische Polymer auf (Co)-Polyester-, (Co)-Polyamid-, Polyolefin-, Ethylenvinylacetat-Basis ist und/oder Kombinationen (Gemische und Copolymerisate) der genannten Polymere umfasst.

11. Thermisch fixierbares Flächengebilde nach einem der vorhergehenden Ansprüche , **dadurch gekennzeichnet, dass** das Bindemittel auf Acrylat-, Styrolacrylat-, Ethylen-Vinylacetat-, Butadien-Acrylat-, SBR-, NBR- und/oder Polyurethan-Basis ist oder Gemische der Bindemittel umfasst.

12. Verfahren zur Herstellung eines thermisch fixierbaren Flächengebildes nach einem der Ansprüche 1 bis 10 umfassend folgende Verfahrensschritte:
a) Bereitstellen einer Trägerlage,
b) Auftragen einer Haftmassenstruktur, umfassend eine Polyurethan-Schmelzklebstoffzusammensetzung, welche ein thermoplastisches Polyurethan in Form eines Umsetzungsprodukts von
- mindestens einem bifunktionellen Polyisocyanat (A) mit einem Isocyanatgehalt von 5 bis 65 Gew.-Anteilen mit
- mindestens einem Polyol (B) ausgewählt aus der Gruppe bestehend aus Polyesterpolyol, Polyetherpolyol, Polycaprolactonpolyol, Polycarbonatpolyol, Copolymer aus Polycaprolactonpolyol Polytetrahydrofuran und Gemischen hiervon sowie gegebenenfalls
- mit mindestens einem Kettenverlängerer (C), enthält, auf ausgewählte Flächenbereiche der Trägerlage und
c) Temperaturbehandlung der aus Schritt b) erhaltenen Trägerlage zum Auf- und Zusammensintern des thermoplastischen Polymers auf der/mit der Oberfläche der Trägerlage.

13. Verwendung eines Flächengebildes nach einem der Ansprüche 1 bis 10, als Einlagestoff zur Fixierung an einem Oberstoff, vorzugsweise mit einer Luftdurchläßigkeit < 100 dm³/s*m² bei einem Prüfdruck von 200 Pa.

14. Verwendung nach Anspruch 13, **dadurch gekennzeichnet, dass** der Oberstoff zumindest auf der dem Einlagestoff zugewandten Seite eine Beschichtung auf Basis von Silikon, Fluorcarbon oder einem thermoplastisches Polyurethan, aufweist.

## Claims

1. Thermo-fusible sheet material particularly for use as a fusible interlining in the textile industry, having a backing ply composed of a textile material supporting a bonding compound structure, wherein the bonding compound structure comprises a Polyurethane hotmelt composition containing a thermoplastic Polyurethane in the form of a reaction product of
- at least one bifunctional, preferably aliphatic, cycloaliphatic or aromatic, polyisocyanate (A) having an isocyanate content of 5 to 65 proportional parts by weight, with
- at least one polyol (B) selected from the group consisting of polyester polyol, polyether polyol, polycaprolactone polyol, polycarbonate polyol, copolymer of polycaprolactone polyol polytetrahydrofuran and mixtures hereof, and also optionally with
- at least one chain extender (C),
**characterized in that** the bonding compound structure is constructed as a two-ply bonding compound structure comprising an underlayer, lying directly on the sheet material, and an overlayer, arranged on the underlayer and comprising the thermoplastic Polyurethane bonding compound, wherein the under layer contains a polyurethane as a binder having a melting point > 190°C and/or a thermoplastic polyurethane having a melting point < 190°C.

2. Thermo-fusible sheet material according to Claim 1, **characterized in that** the polyol (B) is selected from the group consisting of a polyester polyol having a molecular weight of 400 g/mol to 6000 g/mol, a polyether polyol having a molecular weight of 400 g/mol to 6000 g/mol, a polycaprolactone polyol, having a molecular weight of 450 g/mol to 6000 g/mol, a polycarbonate polyol having a molecular weight of 450 g/mol to 3000 g/mol, a copolymer of polycaprolactone polyol and polytetrahydrofuran polyol having a molecular weight of 800 g/mol to 4000 g/mol and mixtures hereof.

3. Thermo-fusible sheet material according to either preceding claim, **characterized in that** the bifunctional polyisocyanate (A) comprises C_{4-C18} aliphatic and/or C₆₋₂₀ cycloaliphatic and/or C₆₋₂₀ aromatic diisocyanates having isocyanate contents of 5 to 65 proportional parts by weight.

4. Thermo-fusible sheet material according to any preceding claim, **characterized in that** the chain extender is selected from the group consisting of ethylene glycol, 1,2-propanediol, 1,3-propanediol, 1,4-butanediol, 1,3-butanediol, 2,3-butanediol, isomeric mixtures thereof, 2,5-pentanedial and also its isomers, cyclchexanedrmethanol (CHDM), 1,6-hexanediol and also its isomers and mixtures hereof.

5. Thermo-fusible sheet material according to any preceding claim, **characterised in that** the reaction of components A, 3 and C takes place in the presence of at least one catalyst, of at least one hydrolysis control agent and/or at least one aging control agent.

6. Thermo-fusible sheet material according to any preceding claim, **characterized in that** the reaction of components A, Bind C takes place in a quantitative ratio of A:B+C corresponding to a molar ratio of NCO:OH of from 0.7 to 1.0, preferably from 0.9 to 1.0 and more preferably from 0.94 to 0.98.

7. Thermo-fusible sheet material according to any preceding claim, **characterised in that** the reaction of components A, B and C takes place in a quantitative ratio of A:B+C corresponding to a molar ratio of NCO:OH of from 0.7 to 1.0, preferably from 0.8 to 0.9 and more preferably from 0.85 to 0.89.

8. Thermo-fusible sheet material according to any preceding claim, **characterized in that** the melting range of the thermoplastic polyurethane hotmelt composition lies between 60°C to 190°C and preferably between 100°C to 140°C.

9. Thermo-fusible sheet material according to any preceding claim, **characterized in that** the textile material is a woven fabric, a knitted fabric or a nonwoven fabric.

10. Thermo-fusible sheet material according to any preceding claim, **characterized in that** the thermoplastic polymer other than the thermoplastic polyurethane is (co)polyester, (co)polyamide, polyolefin, ethylene-vinyl acetate based and/or comprises combinations (mixtures and copolymers) of the recited polymers.

11. Thermo-fusible sheet material according to any preceding claim, **characterized in that** the binder is acrylate, styrene acrylate, ethylene-vinyl acetate, butadiene-acrylate, SBR, NBR and/or polyurethane based or comprises mixtures of said binders.

12. Process for producing a thermo-fusible sheet material according to any of Claims 1 to 10, comprising the steps of:
a) providing a backing ply,
b) applying a bonding compound structure comprising a Polyurethane hotmelt composition containing a thermoplastic polyurethane in the form of a reaction product of
- at least one bifunctional polyisocyanate (A) having an isocyanate content of 5 to 65 proportional parts by weight, with
- at least one polyol (B) selected from the group consisting of polyester polyol, polyether polyol, polycaprolactone polyol, polycarbonate polyol, copolymer of polycaprolactone polyol polytetrahydrofuran and mixtures hereof, and also optionally with
- at least one chain extender (C), to selected areal regions of the backing ply, and
c) thermally treating the backing ply obtained from step b) to sinter the thermoplastic polymer onto/with the surface of the backing ply.

13. Use of a sheet material according to any of Claims 1 to 10 as an interlining for fusion to a top fabric, preferably having an air permeability < 100 dm³/s*m² at a test pressure of 200 Pa.

14. Use according to Claim 13, **characterized in that** a coating based on silicone, fluorocarbon or a thermoplastic polyurethane is present on at least that side of the top fabric which faces the interlining.

## Revendications

1. Structure plane pouvant être fixée thermiquement, en particulier utilisable comme toile d'insertion pouvant être fixée dans l'industrie textile, présentant une couche support en un matériau textile, sur laquelle est appliquée une structure de masse adhésive, la structure de masse adhésive comprenant une composition adhésive fusible de polyuréthane qui contient un polyuréthane thermoplastique sous forme d'un produit de transformation
- d'au moins un polyisocyanate (A) difonctionnel, de préférence aliphatique, cycloaliphatique ou aromatique présentant une teneur en isocyanate de 5 à 65 parties en poids avec
- au moins un polyol (B) choisi dans le groupe constitué par un polyesterpolyol, un polyétherpolyol, un polycaprolactonepolyol, un polycarbonatepolyol, un copolymère de polycaprolactonepolyol et de polytétrahydrofuranne et leurs mélanges ainsi que le cas échéant avec
- au moins un agent d'allongement de chaîne (C), **caractérisée en ce que** la structure de masse adhésive est réalisée sous forme de structure de masse adhésive à deux couches, comprenant une sous-couche placée directement sur la structure plane ainsi qu'une couche supérieure disposée sur la sous-couche et comprenant la masse adhésive de polyuréthane thermoplastique, la sous-couche contenant un polyuréthane, comme liant, présentant un point de fusion > 190°C et/ou un polyuréthane thermoplastique présentant un point de fusion < 190°C.

2. Structure plane pouvant être fixée thermiquement selon la revendication 1, **caractérisée en ce que** le polyol (B) est choisi dans le groupe constitué par un Polyesterpolyol présentant un poids moléculaire de 400 g/mole à 6000 g/mole, un polyétherpolyol présentant un poids moléculaire de 400 g/mole à 6000 g/mole, un polycaprolactone-polyol présentant une poids moléculaire de 450 g/mole à 6000 g/mole, un polycarbonatepolyol présentant un poids moléculaire de 450 g/mole à 3000 g/mole, un copolymère de polycaprolactone-polyol et de polytétrahydrofuranne-polyol présentant un poids moléculaire de 800 g/mole à 4000 g/mole et leurs mélanges.

3. Structure plane pouvant être fixée thermiquement selon l'une quelconque des revendications précédentes, **caractérisée en ce que** le polyisocyanate difonctionnel (A) comprend des diisocyanates aliphatiques en C₄₋₁₈ et/ou cycloaliphatiques en C₆₋₂₀ et/ou aromatiques en C₆₋₂₀ présentant des teneurs en isocyanate de 5 à 65 parties en poids.

4. Structure plane pouvant être fixée thermiquement selon l'une quelconque des revendications précédentes, **caractérisée en ce que** l'agent d'allongement de chaîne est choisi dans le groupe constitué par l'éthylèneglycol, le 1,2- propanediol, le 1, 3-propanadiol, le 1,4-butanediol, le 1,3-butanediol, le 2,3-butanediol, leurs mélanges d'isomères, le 1,5-pentanediol ainsi que ses isomères, le cyclohexanediméthanol (CHDM), le 1,6-hexanediol ainsi que ses isomères et leurs mélanges .

5. Structure plane pouvant être fixée thermiquement selon l'une quelconque des revendications précédentes, **caractérisée en ce que** la transformation des composants A, B et C a lieu en présence d'au moins un catalyseur, d'au moins un agent de protection contre l'hydrolyse et/ou d'au moins un agent de protection contre le vieillissement.

6. Structure plane pouvant être fixée thermiquement selon l'une quelconque des revendications précédentes, **caractérisée en ce que** la transformation des composants A, B et C a lieu dans un rapport molaire de A:B + C, correspondant à un rapport molaire de NCO:OH, de 0,7 à 1,0, de préférence de 0,9 à 1,0 et de manière particulièrement préférée de 0,94 à 0,98.

7. Structure plane pouvant être fixée thermiquement selon, l'une quelconque des revendications précédentes, **caractérisée en ce que** la transformation des composants A, B et C a lieu dans un rapport molaire de A:B + C, correspondant à un rapport molaire de NCO-OH, de 0,7 à 1,0, de préférence de 0,8 à 0,9 et de marnière particulièrement préférée de 0,85 à 0,89.

8. Structure plane pouvant être fixée thermiquement selon l'une quelconque des revendications précédentes, **caractérisée en ce que** la plage de fusion de la composition adhésive fusible de polyuréthane thermoplastique est située entre 60°C à 190°C et de préférence entre 100°C à 140°C.

9. Structure plane pouvant être fixée thermiquement selon l'une quelconque des revendications précédentes, **caractérisée en ce que** le matériau textile est un tissu, un tricot, une étoffe ou un non-tissé.

10. Structure plane pouvant être fixée thermiquement selon l'une quelconque des revendications précédentes, **caractérisée en ce que** le polymère thermoplastique différent du polyuréthane thermoplastique est à base d'un (co)polyester, d'un (co)polyamide, d'une polyoléfine, d'éthylène-acétate de vinyle et/ou de combinaisons (mélanges et copolymères) des polymères mentionnés.

11. Structure plane pouvant être fixée thermiquement selon l'une quelconque des revendications précédentes, **caractérisée en ce que** le liant est à base d'acrylate, de styrène-acrylate, d'éthylène-acétate de vinyle, de butadiéne-acrylate, de SBR, de NBR et/ou de polyuréthane ou comprend des mélanges des liants.

12. Procédé pour la fabrication d'une structure plane pouvant être fixée thermiquement selon l'une quelconque des revendications 1 à 10, comprenant les étapes de procédé suivantes :
a) mise à disposition d'une couche suppart :
b) application d'une structure de masse adhésive, comprenant une composition adhésive fusible de polyuréthane, qui contient un polyuréthane thermoplastique sous forme d'un produit de transformation
- d'au moins un polyisocyanate (A) difonctionnel présentant une teneur en isocyanate de 5 à 65 parties en poids avec
- au moins un polyol (B) choisi dans le groupe constitué par un polyesterpolyol, un polyétherpolyol, un polycaprolactone-polyol, un polycarbonatepolyol, un copolymère de polycaprolactone-polyol et de polytétrahydrofuranne et leurs mélanges ainsi que le cas échéant avec
- au moins un agent d'allongement de chaîne (C), sur des zones surfaciques choisies de la couche support et
c) traitement thermique de la couche support obtenue de l'étape b) pour le frittage du polymère thermoplastique sur/avec la surface de la couche support.

13. Utilisation d'une structure plane selon l'une quelconque des revendications 1 à 10, comme toile d'insertion pour la fixation à un matériau de dessus, présentant de préférence une perméabilité à l'air < 100 dm³/s*m² à une pression de test de 200 Pa.

14. Utilisation selon la revendication 13, **caractérisée en ce que** le matériau de dessus présente, au moins sur la face orientée vers la toile d'insertion, un revêtement à base de silicone, de fluorocarbone ou de polyuréthane thermoplastique.
